# EUROPEAN PATENT APPLICATION

(11) **EP 4 585 571 A1**
(43) Date of publication of application: **16.07.2025**
(21) Application number: 23863214.5
(22) Date of filing: 06.09.2023
(51) Int. Cl.: C02F 1/469, B01D 61/44, B01D 61/46

(54) **BIPOLAR MEMBRANE ELECTRODIALYZER AND METHOD FOR OPERATING SAME**

(30) Priority: 07.09.2022 JP 2022141855
(71) Applicant: Sumitomo Osaka Cement Co., Ltd., Tokyo, 105-8641 (JP); Yamaguchi University, Yamaguchi 753-8511 (JP); Kyushu University, National University Corporation, Nishi-ku Fukuoka-shi Fukuoka 819-0395 (JP)
(72) Inventor: KIKUCHI Sadato, Tokyo 105-8641 (JP); OIZUMI Risa, Tokyo 105-8641 (JP); KONISHI Masayoshi, Tokyo 105-8641 (JP); HIGA Mitsuru, Ube-shi, Yamaguchi 755-8611 (JP); TANIGUCHI Ikuo, Fukuoka-shi, Fukuoka 819-0395 (JP)
(74) Representative: Sonnenberg Harrison Partnerschaft mbB
(86) International application number: PCT/JP2023/032541
(87) International publication number: WO 2024/053676

(57) **Abstract**

Provided are a bipolar membrane electrodialyzer where a current efficiency is high such that deposition of scale in a cation exchange membrane caused by divalent cations is suppressed, and a method for operating the same. The method is a method for operating a bipolar membrane electrodialyzer to produce an acid and an alkali from brine using a bipolar membrane electrodialyzer including a bipolar membrane, a cation exchange membrane and an anion exchange membrane, the method including: performing electrodialysis while adjusting an acid solution and/or an alkali solution to contain a salt to be decomposed.

## Description

### Technical Field

The present invention relates to a bipolar membrane electrodialyzer and a method for operating the same, and particularly relates to a bipolar membrane electrodialyzer that increases a current efficiency to prevent deposition of scale in a cation exchange membrane caused by divalent cations, and a method for operating the same.

### Background Art

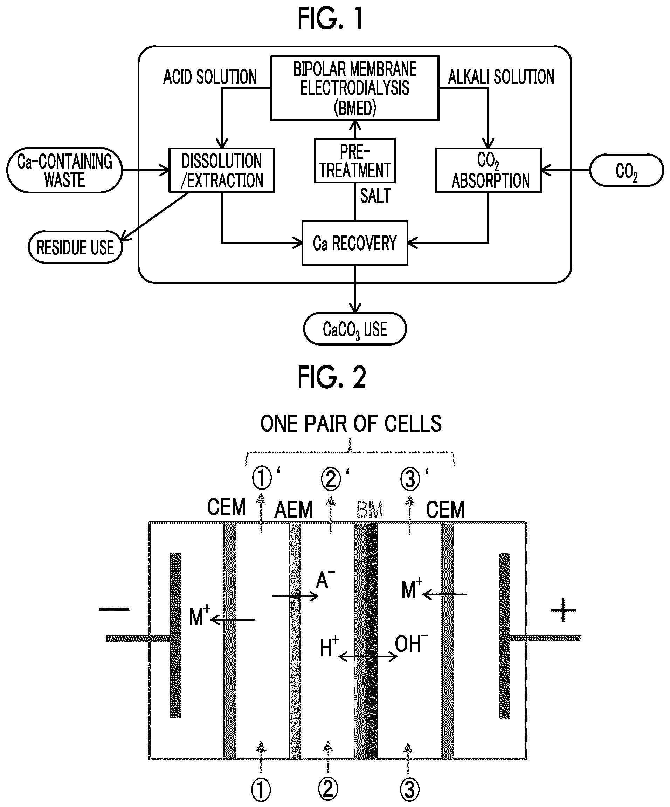

As a countermeasure against global warming, emission reduction or adsorption and immobilization of CO₂ has become a major social challenge. Under these circumstances, as shown in FIG. 1, calcium is efficiently extracted from calcium-containing waste with an acid solution obtained by acid/alkali regeneration using bipolar membrane electrodialysis, and CO₂ in exhaust gas or the like is directly absorbed by an alkali solution. By causing both of CO₂ and the alkali solution to react with each other to achieve CO₂ mineralization, construction of a carbon recycling process for energy saving and resource saving has been proposed.

In the carbon recycling process of FIG. 1, a bipolar membrane electrodialyzer (BMED) is required to achieve a current efficiency of 90% or higher, and operating conditions are not yet found. On the other hand, in the carbon recycling process, divalent cations such as Ca²⁺ penetrate into circulating brine, and react with OH⁻ in a cation exchange membrane such that scale is deposited. As a result, the mobility of cations decreases, which causes an increase in drive voltage.

### Summary of Invention

### Technical Problem

An object of the present invention is to solve the above-described problem and to provide a bipolar membrane electrodialyzer where a current efficiency is high such that deposition of scale in a cation exchange membrane caused by divalent cations is suppressed, and a method for operating the same.

### Solution to Problem

In order to solve the problem, a bipolar membrane electrodialyzer according to the present invention and a method for operating the same have the following technical features.
(1) There is provided a method for operating a bipolar membrane electrodialyzer to produce an acid and an alkali from brine using a bipolar membrane electrodialyzer including a bipolar membrane, a cation exchange membrane and an anion exchange membrane, the method including: performing electrodialysis while adjusting an acid solution and/or an alkali solution to contain a salt to be decomposed.
(2) In the method for operating a bipolar membrane electrodialyzer according to (1), brine produced in a carbon recycling process using the bipolar membrane electrodialyzer is used as the acid solution and/or the alkali solution. In particular, brine that flows toward the bipolar membrane electrodialysis after Ca recovery of FIG. 1 is used.
(3) There is provided a bipolar membrane electrodialyzer including a bipolar membrane, a cation exchange membrane and an anion exchange membrane, the bipolar membrane electrodialyzer including: adjustment means for adjusting an acid solution and/or an alkali solution to contain a salt to be decomposed when an acid and an alkali are produced from brine.

### Advantageous Effects of Invention

A technical feature of the present invention is a method for operating a bipolar membrane electrodialyzer to produce an acid and an alkali from brine using a bipolar membrane electrodialyzer including a bipolar membrane, a cation exchange membrane and an anion exchange membrane, the method including: performing electrodialysis while adjusting an acid solution and/or an alkali solution to contain a salt to be decomposed. As a result, a current efficiency can be improved to suppress deposition of scale in a cation exchange membrane caused by divalent cations. In particular, operating conditions capable of achieving a current efficiency of 90% or higher and a long-term operation for use in brine having a Ca concentration of 1 ppm can be achieved.

### Brief Description of Drawings

FIG. 1 is a diagram showing a carbon recycling process to which the present invention is applied.
FIG. 2 is a schematic diagram showing a BMED system. Here, one pair of cells are shown, but 10 pairs of cells are used. Circles 1 and 1' represent salt flow paths, circles 2 and 2' represent acid flow paths, and circles 3 and 3' represent alkali flow paths. MA that separates M⁺ and A⁻ represents a salt.
FIG. 3 is a diagram showing a calculation flow of a BMED-AB process.
FIG. 4 is a diagram showing a calculation result of the BMED-AB process. An initial acid side solution is 0.001 M Na₂SO₄, an initial alkali side solution is 0.001 M Na₂SO₄, an initial salt side solution is 1.0 M Na₂SO₄, and a current is 4.4 A.
FIG. 5 is a diagram showing a calculation result of the BMED-AB process. An initial acid side solution is 0.001 M Na₂SO₄, an initial alkali side solution is 0.001 M Na₂SO₄, an initial salt side solution is 1.0 M Na₂SO₄, and a current is 1.0 A.
FIG. 6 is a diagram showing a calculation result of the BMED-AB process. An initial acid side solution is 0.001 M NaCl, an initial alkali side solution is 0.001 M NaCl, an initial salt side solution is 1.0 M NaCl, and a current is 4.4 A.
FIG. 7 is a diagram showing a cause for a reduction in acid/alkali current density in the BMED-AB process.
FIG. 8 is a diagram showing conditions and an experiment method of a distribution experiment.
FIG. 9 is a diagram showing an experimental value and a calculated value of a Ca ion concentration in a CEM. Circles (experimental values) and curves (calculated values) are shown.
FIG. 10 is a diagram showing a photograph of a BMED experimental system.
FIG. 11 shows an example of a BMED experimental result (Experiment No. BMED Circle 6).
FIGS. 12A and 12B show a BMED experimental result when a standard commercially available AEM and an added salt Na₂SO₄ are used.
FIG. 13 shows a BMED experimental result when a standard commercially available AEM and an added salt NaCl are used (Experiment No. BMED Circles 26, 27, and 28).
FIG. 14 shows a BMED experimental result when a proton (H)-impermeable AEM and an added salt Na₂SO₄ are used (Experiment No. BMED Circles 19, 20, and 21).
FIG. 15 shows a BMED experimental result when a proton (H)-impermeable AEM and an added salt NaCl are used (Experiment No. BMED Circles 23, 24, and 25).
FIG. 16 is a schematic diagram showing the BMED experimental system. In addition, the BMED experimental system is also an example of the BMED system according to the present invention. MA represents a salt.
FIG. 17 is a flowchart showing a long-term operation evaluation system for ED.
FIG. 18 is a diagram showing photographs of the long-term operation evaluation system for ED.
FIG. 19 is a diagram showing a result of a CEM deterioration behavior evaluation (acceleration test) using Ca ions.
FIG. 20 is a diagram showing a result of a long-term operation evaluation at an initial Ca concentration of 0 ppm and NaCl 0.0 M.
FIG. 21 is a diagram showing a result of a long-term operation evaluation at an initial Ca concentration of 10 ppm and NaCl 0.0 M.
FIG. 22 is a diagram showing a result of a long-term operation evaluation at an initial Ca concentration of 10 ppm and NaCl 1.0 M.
FIG. 23 is a diagram showing comparison between potential changes of NaCl 0.0 M (Circle 1) and NaCl 1.0 M (Circle 2) at an initial Ca concentration of 10 ppm.

### Description of Embodiments

A bipolar membrane electrodialyzer according to the present invention and a method for operating the same will be described below in detail. In order to facilitate understanding of the present invention, the following description is given in order of work items of research and development.

In the present research and development, in particular, in an acid/alkali regeneration (BMED-AB) technology (process) using bipolar membrane electrodialysis, a numerical analysis method in a multivalent and multi-component ionic system is constructed to analyze the effects of operating conditions of the system or characteristics of membranes (bipolar membrane (BM), an anion exchange membrane (AEM), and a cation exchange membrane (CEM)) to be used on energy efficiency and long-term stable operability of the process. In addition, a system that improves energy saving and resource saving characteristics of the entire process using the numerical analysis method and stably operates using treated water of calcium recovery waste liquid is constructed.

### [Construction of Numerical Simulation of BMED-AB Process]

### (I) Relationship between Current Efficiency and Operating Conditions of BMED-AB Process

An ion transport simulation model in a multi-component ionic system for estimating an acid/alkali production process in a BMED system including a CEM, an AEM, and a BM shown in FIG. 2 is constructed. The ionic mobility in the standard commercially available CEM and AEM is predicted, and this value is analyzed from an experimental value and a simulation calculated value of an intra-membrane ion concentration in the multi-component ionic system. Further, a desktop bipolar membrane electrodialysis (BMED) system is introduced to measure a relationship between an applied current and an initial salt concentration of the BMED-AB process and a current efficiency of the process. Based on these results, an analysis program of the BMED-AB process is constructed, and operating conditions for obtaining a current efficiency of 85% or higher is estimated.

As shown in Table 1, both of the mobility of Na⁺, K⁺, Mg²⁺, and Ca²⁺ ions in a commercially available CEM (manufactured by ASTOM Corporation, Neosepta (registered tradename) CSE) and the mobility of Cl⁻ and SO₄²⁻ ions in a commercially available AEM (manufactured by ASTOM Corporation, Neosepta (registered tradename) ASE) obtained from a membrane resistance and an intra-membrane ion concentration depend on a membrane water content and are values that are about 1/40 to 1/100 an ionic mobility in water. In addition, as the hydrated ionic radius of the ions increases, the ionic mobility in the membrane tends to decrease. It is found that the ionic mobility in the membrane can be estimated by using the ionic mobility in water, the membrane water content, and a correction factor.

**[Table 1]**

| Membrane | Ion | Ion Concentration in Membrane [10⁻¹⁵ mol m²/Js] | Ion Concentration in Water¹⁾ [10⁻¹⁵ mol m²/Js] |
|---|---|---|---|
| CSE | Na⁺ | 11.1 | 538 |
| | K⁺ | 19.2 | 789 |
| | Ca²⁺ | 4.14 | 320 |
| | Mg²⁺ | 2.64 | 285 |
| ASE | Cl⁻ | 11.2 | 820 |
| | SO₄²⁻ | 4.22 | 430 |

| | | | |
|---|---|---|---|
| 1) Handbook of Chemistry, Basic Volume II, Maruzen (1984) | | | |

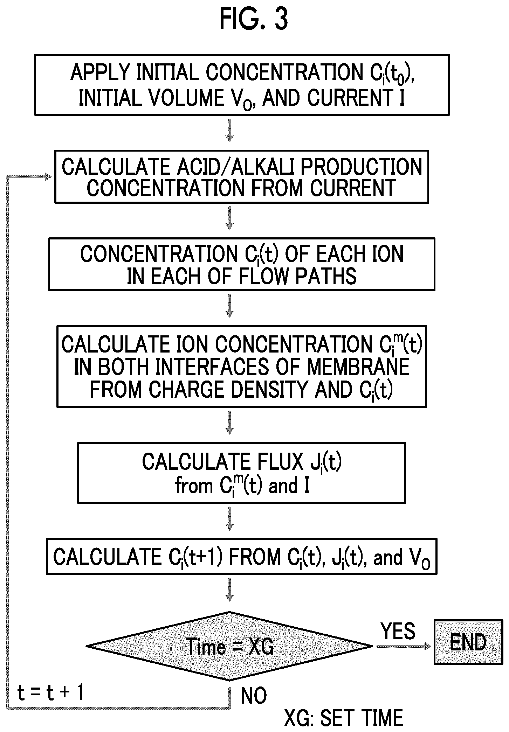

FIG. 3 is a flowchart showing an ion transport simulation of the BMED-AB process. First, an initial concentration, an initial volume, and an applied current are input to calculate acid and alkali concentrations produced by the BM from the current, and an ion concentration in each of the membranes is calculated from the Donnan equilibrium equation using the acid and alkali concentrations. Based on these concentrations, an ion flux of each of the ions in the membrane is calculated from an ion flux equation based on the Nernst-Planck equation. Based on this flux value, changes over time in the concentration of each of the ions in a salt flow path, an acid flow path, and an alkali flow path are obtained.

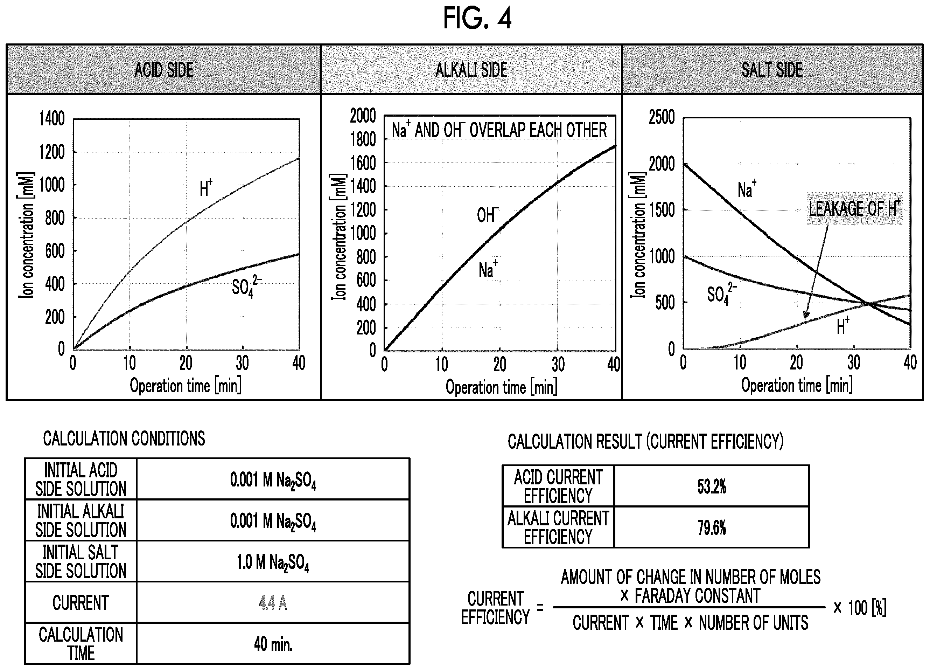

An example of a calculation result of a BMED-AB process simulation program is shown. FIG. 4 shows a change over time in the ion concentration in each of solution sides when a current of 4.4 A is applied in an initial acid side solution: 0.001 M Na₂SO₄, an initial alkali side solution: 0.001 M Na₂SO₄, and an initial salt side solution 1.0 M Na₂SO₄. Concentrations of protons produced by the BM on the acid side and SO₄²⁻ ions permeating through the AEM and moving from the salt side increase over time such that sulfuric acid is produced. In addition, concentrations of OH⁻ ions produced by the BM on the alkali side and Na⁺ ions permeating through the CEM and moving from the salt side increase over time such that alkali is produced. On the salt side, as SO₄²⁻ ions and Na⁺ ions move to the acid side and the alkali side, respectively, the concentration of Na₂SO₄ decreases. The current efficiencies of the acid and the alkali in the process are obtained from Expression 1 below. Current Efficiency = (Amount of Change in Number of Moles × Faraday Constant)/(Current × Time × Number of Units) × 100%

The current efficiencies of the acid and the alkali calculated using this expression are 53.2% and 79.6%, respectively, and the current efficiency of the acid is lower than the current efficiency of the alkali. The reason why the current efficiencies satisfy 100% > alkali current efficiency > acid current efficiency is presumed to be that the H⁺ ion concentration increases over time in the graph of the change in the ion concentration of the salt side, H⁺ ions permeate through the AEM and move from the acid side to the salt side, a part of the H⁺ ions pass through the CEM and move to the alkali side, and water is produced from a neutralization reaction with OH⁻ ions.

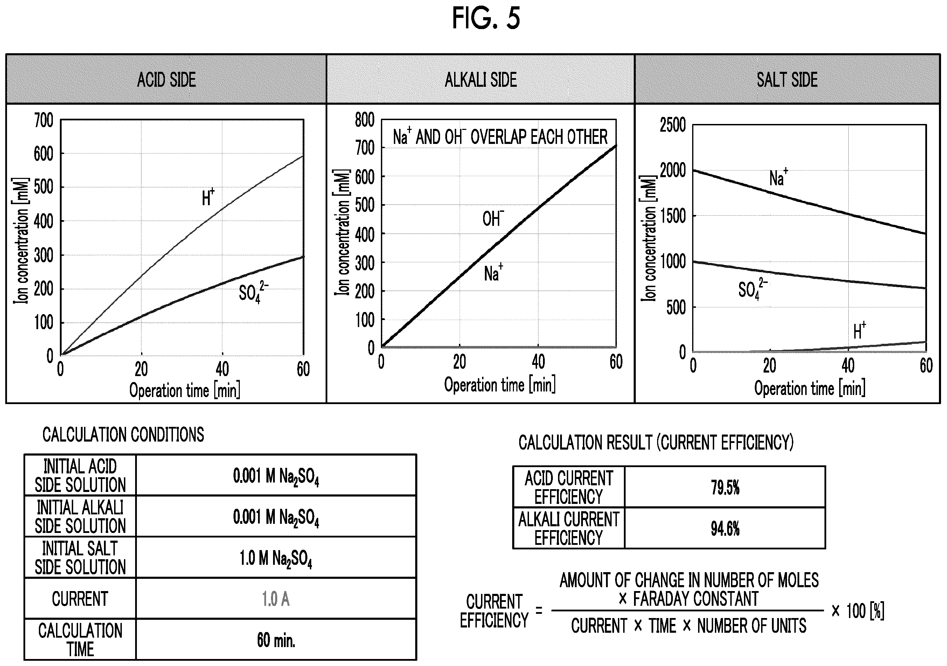

Next, FIG. 5 shows a result of calculation under the same conditions as the conditions of FIG. 4, except that the current is reduced from 4.4 A to 1.0 A. In this case, the current efficiencies of the acid and the alkali are 79.5% and 94.6%, respectively, which are higher than the current efficiencies of FIG. 4. The reason for this is presumed to be that, since the concentration of the produced acid is lower than the concentration of FIG. 4, the amount of H⁺ ions moving from the acid side to the salt side and the alkali side is reduced as shown in the graph of the salt side of FIG. 5.

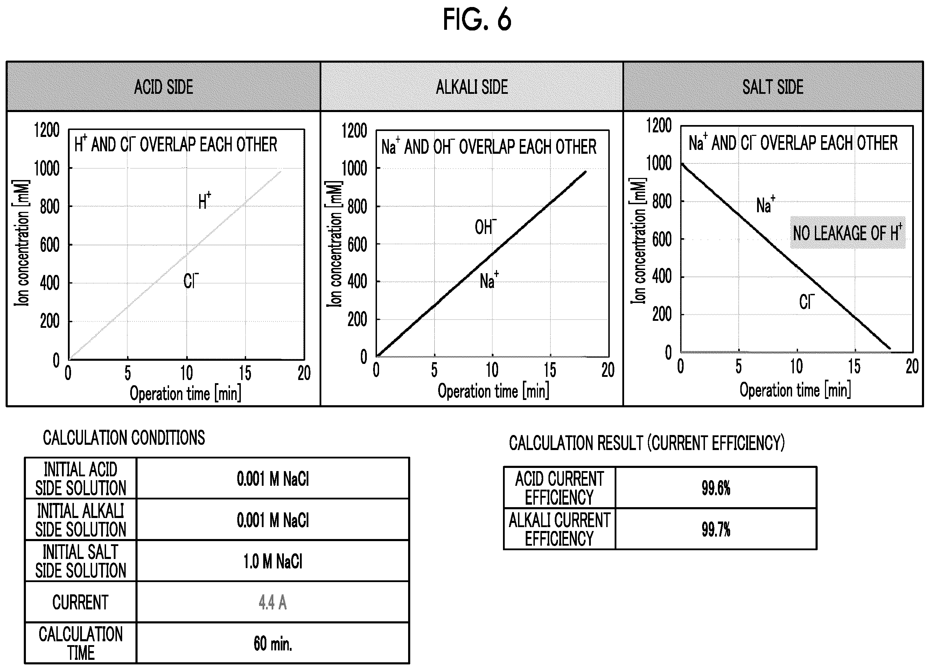

FIG. 6 shows a result of calculation of the BMED-AB process under the same conditions as the conditions of FIG. 4, except that the salt is changed from sulfate (Na₂SO₄) to hydrochloride (NaCl). Under the conditions, the concentrations of each of the ions on the acid side and the alkali side linearly increase over time, and the concentrations of each of the ions on the salt side linearly decrease over time. At this time, the current efficiencies of the acid and the alkali are 99.6% and 99.7%, respectively, which are close to 100%. As can be seen from the result that substantially no H⁺ ions are observed on the salt side, the amount of H⁺ ions permeating through the AEM is significantly small. The reason for this is presumed to be that SO₄²⁻ ions have a larger hydrated ionic radius than Cl⁻ ions and the ionic mobility in the membrane is small. In the related art, the permeability of cations as sub ions in the AEM is significantly low. However, it is known that H⁺ ions are special and can permeate through the AEM. In an operation at a constant current, the sum of permeation amounts of H⁺ ions and anions (SO₄²- ions or Cl⁻ ions) permeating through the AEM is proportional to the current value. Therefore, it is presumed that SO₄²⁻ ions that are not likely to permeate (small ionic mobility) have a larger H⁺ ion permeation amount than Cl⁻ ions that are likely to permeate.

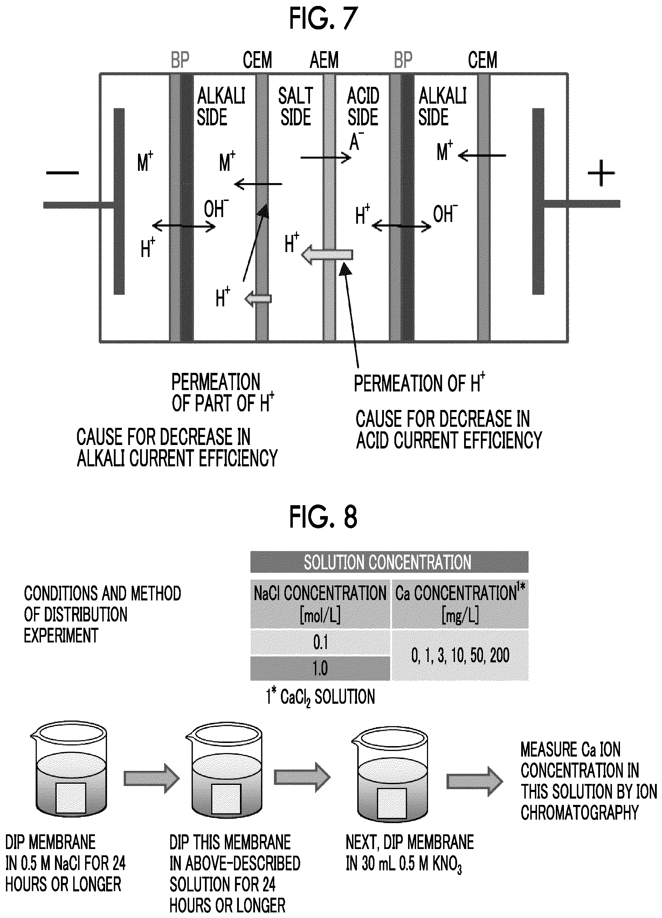

Using the analysis program of the BMED-AB process, the process is analyzed to perform the following quantitative estimation.
(1) The permeation amount of H⁺ ions in the AEM is a value that is not negligible irrespective of sub ions.
(2) The permeation of H⁺ ions from the acid side to the salt side causes a decrease in acid current efficiency. A part of the H⁺ ions permeates through the alkali side and reacts, which causes a decrease in alkali current efficiency (refer to FIG. 7).
(3) From the above, the alkali current efficiency > the acid current efficiency is satisfied.
(4) Since the permeability of the AEM satisfies SO₄²⁻< Cl⁻, the hydrochloride can be expected to have a higher current efficiency than the sulfate.
(5) As the concentrations of the acid/alkali produced decrease (low current operation), the permeation amount of H⁺ decreases such that the current efficiency is improved.
(6) The improvement of the current efficiency is expected by using the AEM having low H⁺ permeability.

### (II) Analysis of CEM Deterioration Behavior Caused by Ca Ions of BMED-AB Process

One problem in putting the BMED-AB process into practical use is that, when divalent ions such as Ca²⁺ are present in the salt solution to be supplied, the produced alkali and Ca ions or the like produce scale having low solubility in the CEM and cause damage of the membrane or performance decrease. A relationship between the amount of divalent ions such as Ca ions incorporated into the CEM and the operating conditions is searched, and a relationship between the divalent ion concentration allowed in the salt solution in the BMED-AB process and an increase in voltage caused by scale production during a long-term operation is investigated.

The ion concentration in the membrane in the multi-component ionic system is calculated based on the Donnan equilibrium equation. In addition, FIG. 8 shows conditions of a distribution experiment for measuring the ion concentration in the membrane and an experiment method thereof. Here, the distribution experiment is performed using a Neosepta (registered tradename) CSE that is a standard commercially available CEM (manufactured by ASTOM Corporation) and using solutions containing 0, 1, 3, 10, 50, and 200 mg/L of Ca ions in 100 mM and 1000 mM NaCl.

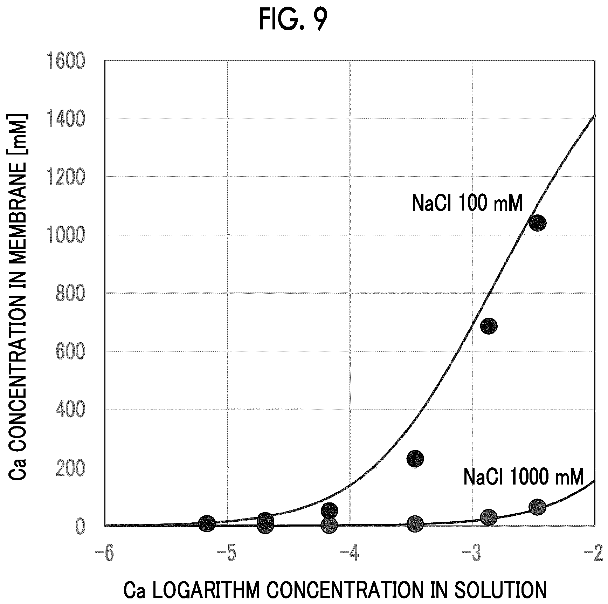

As a result of calculating the Ca ion concentration in the CEM using the multi-component ionic system simulation, even when Na⁺ ions of 100-fold high concentration where the Ca ion concentration in 100 mM NaCl is 1.0 mM are present as indicated by a solid line in FIG. 9, the Ca ion concentration in the CEM is high at about 700 mM. This shows that Ca ions are incorporated into the membrane with higher selectivity than monovalent cations such as Na⁺ that coexist in the solution. On the other hand, when the NaCl concentration is 1000 mM, the Ca ion concentration in the membrane rapidly decreases to about 10 mM. When the concentration of the coexisting monovalent cations increases, the Ca ion concentration in the membrane decreases. Although not shown herein, based on a theoretical calculation result, this tendency is more significant when charge density in the membrane decreases. FIG. 9 also shows an experimental value of the ion concentration in the CSE. The calculated value quantitatively matches with the experimental value, and the validity of the calculation method is verified. From the above, it is found that, in order to reduce CEM deterioration caused by divalent cations that are the main cause for inhibition of stable operation of the BMED-AB process, (1) the supply of the high concentration monovalent ion solution to the BMED and (2) the use of the low charge density CEM are effective.

### [Investigation of Operating Conditions of BMED-AB Process]

### (I) Relationship between Current Efficiency and Operating Conditions of BMED-AB Process

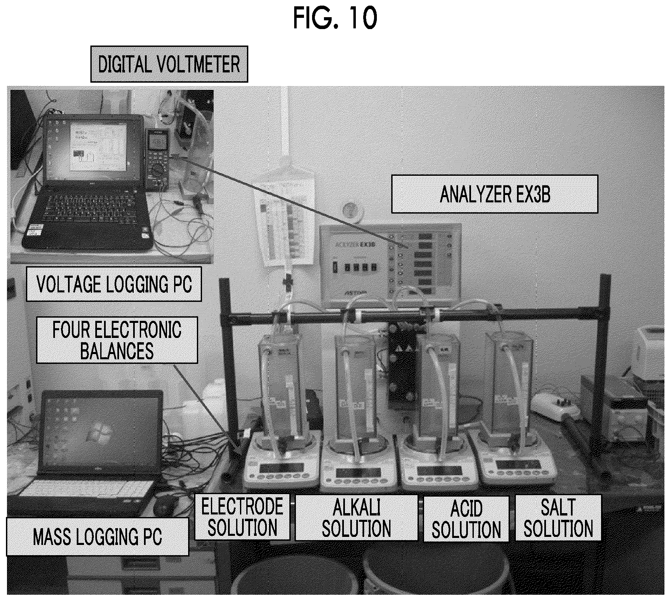

The estimation of the simulation of the above-described BMED-AB process is checked, and an acid/alkali production experiment is performed using the desktop bipolar membrane electrodialyzer shown in FIG. 10 to verify operating conditions where the acid/alkali current efficiency is 85% or higher. This system includes 10 pairs of cells, each pair of which includes the CEM, the salt flow path, the AEM, the acid flow path, the BM, and the alkali flow path in the schematic diagram of the BMED system shown in FIG. 2. The effective membrane area is 55 cm². In addition, a nickel electrode and a flow path for an electrode solution are provided at both ends of the system. A predetermined salt solution, a predetermined acid solution, a predetermined alkali solution, and a predetermined electrode solution are supplied to the flow paths by a pump, and are circulated through a brine tank, an acid solution tank, an alkali solution tank, and an electrode solution tank. Along with the movement of the ions in the electrodialysis experiment, water (hydrated water) hydrated with the ions also moves. Therefore, in the experiment, as shown in FIG. 10, each of the tanks is provided on an electronic balance, and a change over time in volume is calculated from a change in weight. A change over time in the concentration of each of the tanks is measured by a pH meter or a conductivity sensor and is recorded in a logging PC.

Table 2 shows conditions of the BMED experiment. The volumes of the tanks are all 500 mL, and 1 M NaOH is used as the electrode solution. Neosepta (registered tradename) CSE is used as the cation exchange membrane, Neosepta (registered tradename) BM-1 is used as the bipolar membrane, Neosepta (registered tradename) ASE that is a standard commercially available AEM is used as the anion exchange membrane, and Neosepta (registered tradename) ACM that is a proton impermeable AEM is used. In the ED operation, a current of 4.4 A or 1.0 A is caused to flow, and Na₂SO₄ or NaCl is used as initial electrolytes of the salt side, the acid side, and the alkali side. Here, the concentrations of the electrolytes on the salt side are 1 M, and the initial concentrations thereof on the acid side and the alkali side are changed in a range of 0.001 M to 0.5 M to perform the experiment.

**[Table 2]**

| Experiment No. | Used Membrane | Current (A) | Initial Solution Conditions | | | | |
|---|---|---|---|---|---|---|---|
| | | | Salt | Acid | | Alkali | |
| | | | Solute | Solute | Concentration (M) | Solute | Concentration (M) |
| BMED⑥ | ASE | 4.4 | Na₂SO₄ | H₂SO₄ | 0.001 | Na₂SO₄ | 0.001 |
| BMED⑦ | | | | | 0.1 | | 0.1 |
| BMED⑩ | | 1.0 | | | 0.001 | | 0.001 |
| BMED⑪ | | | | | 0.001 | | 0.5 |
| BMED⑫ | | 4.4 | NaCl | NaCl | 0.001 | NaCl | 0.001 |
| BMED⑭ | | 1.0 | | | 0.001 | | 0.001 |
| BMED⑮ | ACM | 4.4 | | | 0.001 | | 0.001 |
| BMED⑰ | | | | | 0.1 | | 0.1 |
| BMED⑱ | | 1.0 | | | 0.001 | | 0.001 |
| BMED⑲ | | 4.4 | Na₂SO₄ | Na₂SO₄ | 0.1 | Na₂SO₄ | 0.1 |
| BMED⑳ | | | | | 0.001 | | 0.001 |
| BMED 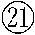 | | 1.0 | | | 0.001 | | 0.001 |
| BMED 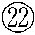 | ASE | 4.4 | NaCl | NaCl | 0.1 | NaCl | 0.1 |
| BMED 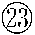 | ACM | 4.4 | NaCl | NaCl | 0.001 | NaCl | 0.001 |
| BMED 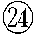 | | | | | | | 0.1 |
| BMED 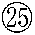 | | | | | | | 0.5 |
| BMED 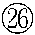 | ASE | | | | | | 0.001 |
| BMED 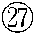 | | | | | | | 0.1 |
| BMED 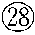 | | | | | | | 0.5 |

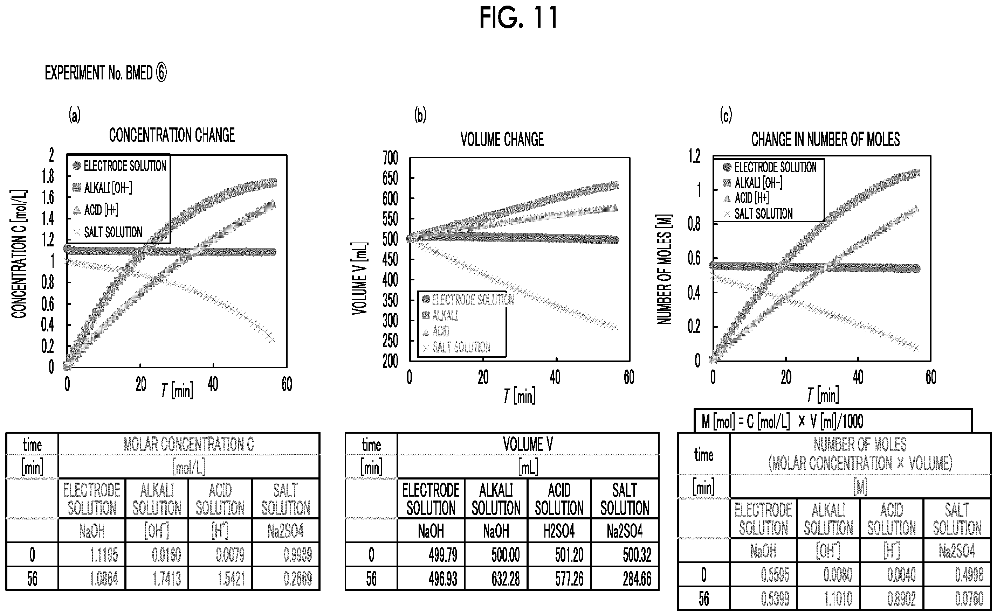

FIG. 11 shows (a) a change over time in concentration (b) change over time in volume of each of the tanks, for example, when the desktop bipolar membrane electrodialyzer operates for 56 hours under conditions of the initial concentrations: the alkali side solution (1 mM, Na₂SO₄), the acid side solution (1 mM, Na₂SO₄), and the salt side solution (1 M, Na₂SO₄) and the current: 4.4 A (Experiment No. BMED (6)), and FIG. 11 also shows a result of calculating (c) a change in the number of moles from the two pieces of data.

In this result, the concentration or volume of the electrode solution tank is substantially constant. However, the concentrations on the alkali side and the acid side increase, and the concentration on the salt side decreases. The reason for this is as follows. As shown in the above-described simulation result, an acid is produced on the acid side due to H⁺ produced by water desorption in the BM and SO₄²⁻permeating through the AEM, and an alkali is produced on the alkali side due to OH⁻produced by water desorption in the BM and Na⁺ permeating through the CEM. In addition, SO₄²⁻ on the salt side permeates through the AEM and moves to the acid side, and Na⁺ ions permeate through the CEM and move to the alkali side. In addition, as the concentration increases, the volume increases on the acid side and the alkali side, and the volume decreases on the salt side. At this time, as a result of calculating the current efficiencies from Expression (1), an acid current efficiency: 58% and an alkali current efficiency: 72% are obtained. The current efficiency and the acid/alkali production amounts described below are obtained by calculating the current efficiency from the result of the change over time in the number of moles.

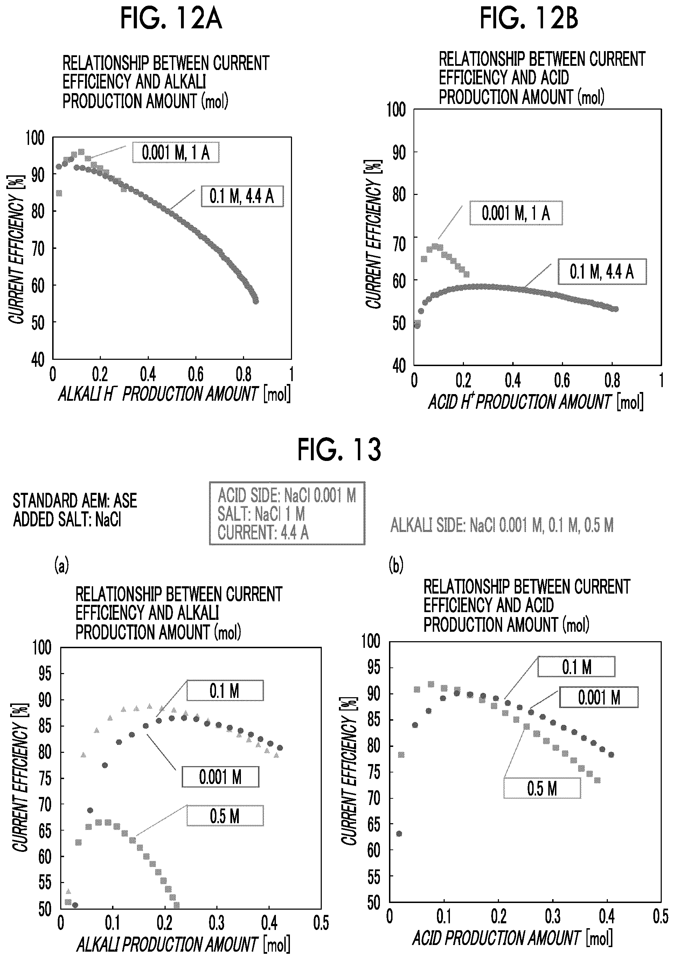

FIGS. 12A and 12B show a relationship between an alkali current efficiency, an alkali production amount, an acid current efficiency, and an acid production amount in the BMED experimental result when a standard commercially available AEM and an added salt Na₂SO₄ are used. In this result, when the standard commercially available AEM and the added salt Na₂SO₄ are used, the acid current efficiency is lower than the alkali current efficiency, and the acid current efficiency is 55% to 70%. In addition, as the production amount increases, the current efficiency decreases. From the simulation result, the reason for this is presumed to be that, as the acid/alkali concentration increases, H⁺ and OH⁻ as sub ions are diffused from the AEM or the CEM.

FIG. 13 shows a relationship between an alkali current efficiency, an alkali production amount, an acid current efficiency, and an acid production amount in the BMED experimental result when a standard commercially available AEM and an added salt NaCl are used. In this result, when NaCl is used as the added salt, the acid/alkali current efficiency increases, in particular, an increase in acid current efficiency is significant as compared to the case of Na₂SO₄. From the simulation result of FIG. 6, the reason for this is presumed to be that, when SO₄²⁻ ions having a small ionic mobility are present, the H⁺ ion permeation amount increases as compared to Cl⁻ ions that are likely to permeate. In addition, when the concentration of the salt to be added to the alkali side increases from 0.001 M to 0.1 M, the alkali current efficiency slightly increases. However, once the concentration of the salt reaches 0.5 M, the concentration rapidly decreases. The reason for this is that, when the salt concentration of the alkali side excessively increases, the selective permeability of the CEM decreases, and the amount of OH⁻ diffused on the salt side increases.

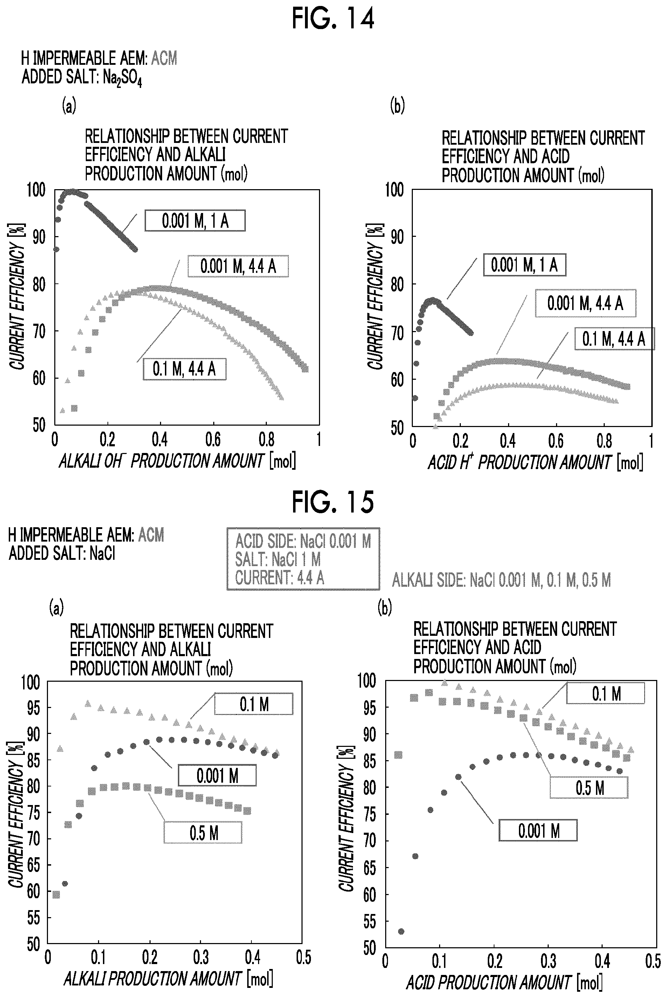

FIG. 14 shows a relationship between an alkali current efficiency, an alkali production amount, an acid current efficiency, and an acid production amount in the BMED experimental result when a proton impermeable AEM and an added salt Na₂SO₄ are used. When Na₂SO₄ is used in the proton impermeable AEM, the current efficiency is not improved, and when the salt concentration is 0.1 M and the current is 4.4 A on the alkali side, the values are lower than the values of the standard commercially available AEM as shown in FIGS. 12A and 12B. The reason for this is that the permeability of the SO₄²⁻ ions in the proton impermeable AEM is lower than the permeability of the standard commercially available AEM.

FIG. 15 shows a relationship between an alkali current efficiency, an alkali production amount, an acid current efficiency, and an acid production amount in the BMED experimental result when a proton impermeable AEM and an added salt NaCl are used. In this result, when NaCl is used in the proton impermeable AEM, the acid current efficiency dramatically increases as compared to Na₂SO₄ shown in FIG. 14, and the alkali current efficiency also increases accordingly. Further, the current efficiencies of the acid and the alkali are higher than the current efficiencies of the standard commercially available AEM shown in FIG. 13. When the NaCl concentration to be added to the alkali side increases from 0.001 M to 0.1 M, the current efficiencies of the acid and the alkali increase, and 90% or higher of current efficiencies of the acid and the alkali are achieved. When the concentration of the added salt increases up to 0.5 M, the current efficiency conversely decreases, in particular, a decrease in alkali current efficiency is significant. The reason for this is presumed to be that, when the NaCl concentration in the alkali side flow path excessively increases, the ion selectivity of the CEM decreases, and the permeation amount of OH⁻ to the salt side increases.

In conclusion, the following points are clarified from the simulation result of the BMED-AB process and the result of the acid/alkali production experiment in the desktop BMED system.
(1) The permeation of H⁺ ions from the acid side to the salt side causes a decrease in acid current efficiency. A part of the H⁺ ions permeates through the alkali side and reacts, which causes a decrease in alkali current efficiency. In this case, the alkali current efficiency > the acid current efficiency is satisfied.
(2) In the standard commercially available AEM, the sulfate system has a higher current efficiency than the hydrochloride system. The reason for this is presumed to be that, since the permeability of Cl⁻ ions is higher than the permeability of SO₄²⁻ ions in the membrane, the diffusion of H⁺ in the AEM during the BMED process is small.
(3) When the proton impermeable AEM is used, the acid/alkali current efficiency in the sulfate system is lower than those in the standard commercially available AEM. However, in the hydrochloride system, the acid/alkali current efficiency is higher than those in the standard commercially available AEM.
(4) When the added salt is added to the alkali side in the hydrochloride system of the proton impermeable AEM, the acid/alkali current efficiency increases, and both of the current efficiencies of the acid and the alkali are 90% or higher at 0.1 M.
(5) When the concentration of the added salt is 0.5 M in the case of (4), the current efficiency decreases conversely, in particular, the alkali current efficiency significantly decreases. The reason for this is presumed to be that the permeation amount of OH- from the CEM increases. The range of the concentration of the added salt is preferably 0.001 M or higher and lower than 0.5 M.

As described above, it is found that the current efficiency in the BMED-AB process largely depends on the ion concentration in the system thereof. The reason for this is presumed to be that the ion selectivity of the CEM and the AEM used in the process is not constant and largely depends on the ion concentration and the ion composition of the solution facing the membrane.

In these results, by adding 0.1 M salt to the alkali side in the hydrochloride system of the proton impermeable AEM, an acid/alkali current efficiency of 90% or higher is achieved.

### (II) Analysis of CEM Deterioration Behavior Caused by Ca Ions of BMED-AB Process

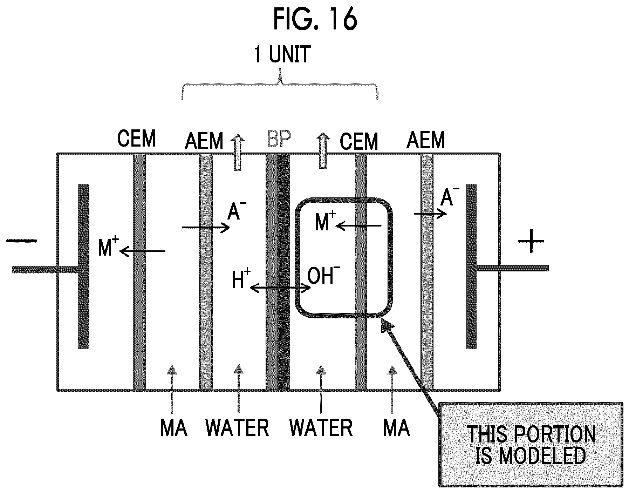

As described above, in the application of the BMED-AB process, in addition to the improvement of the current efficiency, when divalent ions such as Ca²⁺ are present in brine to be supplied, scale is produced in the CEM, which causes a problem of an increase in operating voltage or occurrence of membrane damage. Accordingly, as shown in FIG. 16, the CEM in the BMED and the salt solutions on both sides thereof are modeled, and a relationship between the divalent ion concentration allowed in the salt solution in the BMED-AB process and an increase in voltage caused by scale production during a long-term operation is investigated. The disposition of the membrane in FIG. 16 can be adopted as an example of the bipolar membrane electrodialyzer according to the present invention.

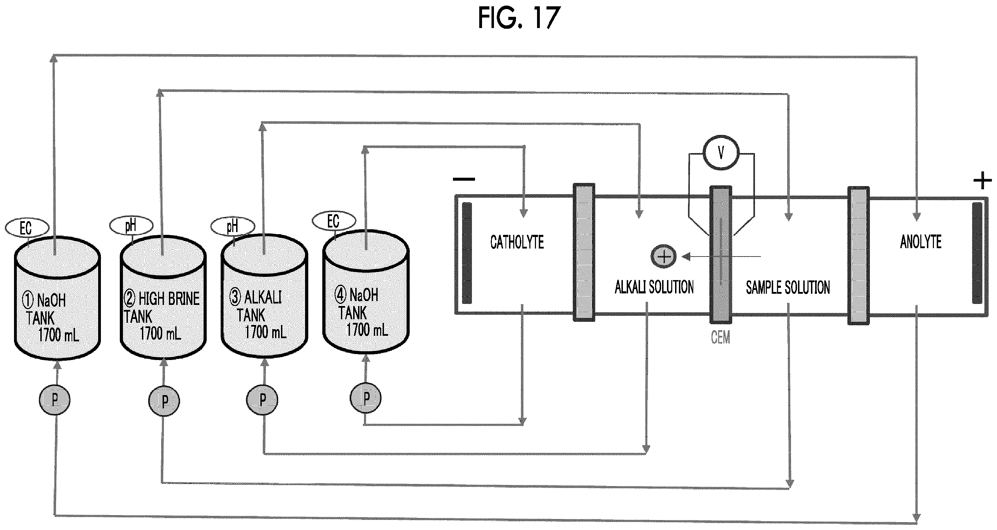

FIG. 17 is a flowchart showing a long-term operation evaluation system for ED constructed to investigate the effects of divalent ions in the supplied brine in the BMED-AB process. In this system, a platinum probe electrode is disposed on both sides of a CEM (hereinafter, referred to as the sample membrane) at the center of a cell consisting of four sections, electrodialysis is performed while supplying brine including various Ca concentrations, and a change over time in the voltage between the probe electrodes is measured. Table 3 shows the experiment conditions. In this system when a small amount of Ca ions in the sample solution move to the cathode side, the Ca ions are incorporated into the membrane as shown in FIG. 9 to be present in a high concentration. It is assumed that, while OH⁻ in the alkali solution is attracted to the anode side, the Ca ions and a small amount of OH⁻ present in the membrane as sub ions of the CEM produce scale in the membrane. Since the membrane resistance increases due to the scale, the scale production amount can be quantitatively investigated by observing the amount of increase in the potential between the probe electrodes.

**[Table 3]**

| Item | Conditions |
|---|---|
| Sample Solution | NaCl + HCl + Ca Ions, 100 mL |
| Alkali Solution | NaOH, 100 mL |
| Anolyte | 2M NaOH, 100 mL |
| Catholyte | 1M NaOH, 100 mL |
| Current Application Area | 2 cm × 2 cm(4 cm²) |
| Current Density | 100 mA/cm² (10 A/dm²) |
| Temperature | 25°C |
| Electrode | Pt/Pt |

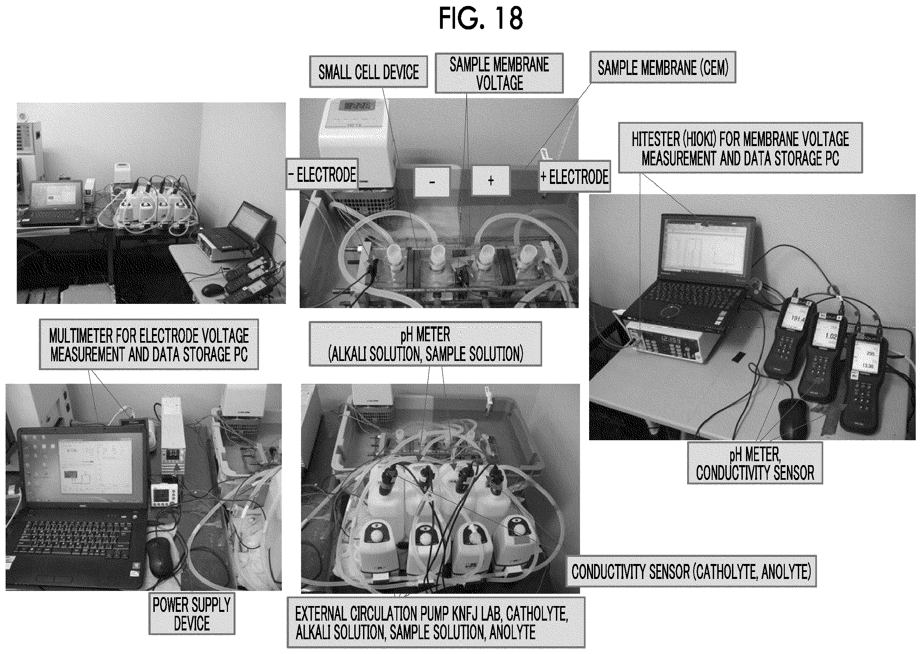

FIG. 18 is a diagram showing photographs of the long-term operation evaluation system for ED. In the portion above the center of the drawing, a cell consisting of four sections is interposed between two platinum electrodes, a catholyte chamber, a barrier membrane, an alkali solution chamber, and a sample CEM are present in this order from the left, a probe electrode is present on both sides thereof, and a sample solution chamber, a barrier membrane, and an anolyte chamber are present on the left side thereof. Each of the solution chambers contains a solution shown in Table 3. The solutions are circulated by pumps below the center of the drawing together with the solution tanks, respectively, and the pH of the solution tank is measured by a pH meter. During the electrodialysis, a current having a current density of 100 mA/cm² is caused to flow between the anode and the cathode at both ends. The probe electrode potential, the applied voltage, the pH of each of the solutions, and a change over time in conductivity are collected in a data logger and stored in a PC.

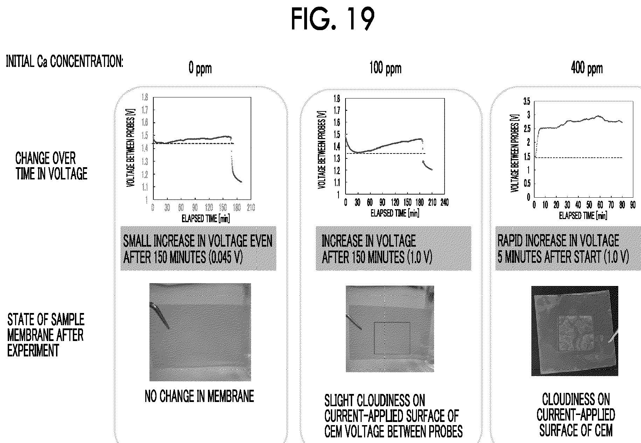

FIG. 19 shows a result of evaluation of a CEM deterioration behavior (acceleration test) using Ca ions. When Ca ions are not present (0 ppm) in the sample solution, even after performing electrodialysis for 150 minutes, the probe electrode potential does not substantially increase. In addition, even when the cell is disassembled after the experiment to observe the state of the sample membrane, there is no change in the membrane. Next, when 100 ppm of Ca ions are present in the sample solution, after performing electrodialysis for 150 minutes, the probe electrode potential increases by 1.0 V. In addition, cloudiness is slightly observed in a current-applied surface (in a red frame) of the sample membrane after the experiment. Further, when 400 ppm of Ca ions are present in the sample solution, a rapid probe electrode potential is observed within just 5 minutes after the start of current application. 80 minutes after current application, when the cell is disassembled to observe the sample membrane, cloudiness is clearly observed on the current-applied surface. The reason for this is that a small concentration of Ca ions present in the sample solution are incorporated into the sample membrane such that the Ca ions and OH⁻ present in the alkali solution react in the membrane to produce scale. This way, when the Ca concentration in the sample solution increases, an increase in probe electrode potential is significant, and a result of an increase in the amount of Ca scale is obtained.

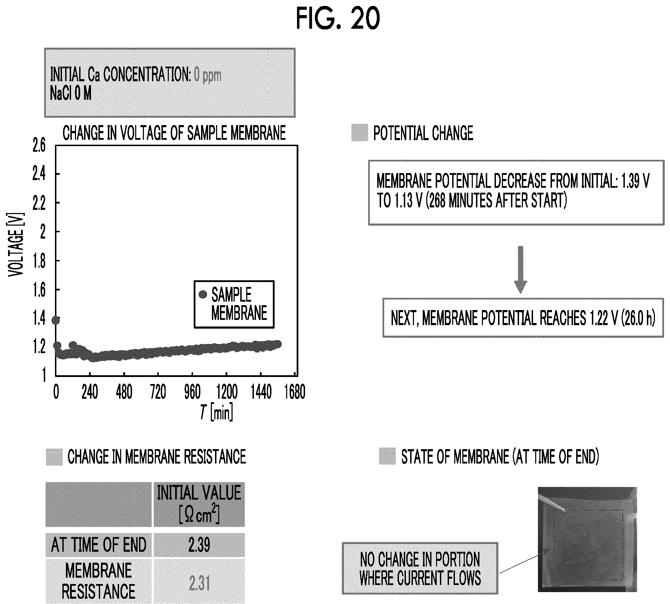

FIG. 20 shows a result of a long-term operation evaluation at an initial Ca concentration of 0 ppm and NaCl 0.0 M. As shown in the upper portion of the drawing, in this case, the probe electrode potential decreases from 1.39 V to 1.13 V and reaches 1.22 V after 26 hours. The reason for a decrease in initial potential is presumed to be that the membrane temperature increases due to current application such that the membrane resistance decreases. When the cell is disassembled after the measurement to measure the membrane resistance, the membrane resistance is 2.31 Ωcm², which is not substantially different from 2.39 Ωcm² as a value before the measurement. In addition, as shown in the lower right portion of the drawing, no change is observed on the current-applied surface of the membrane after the measurement.

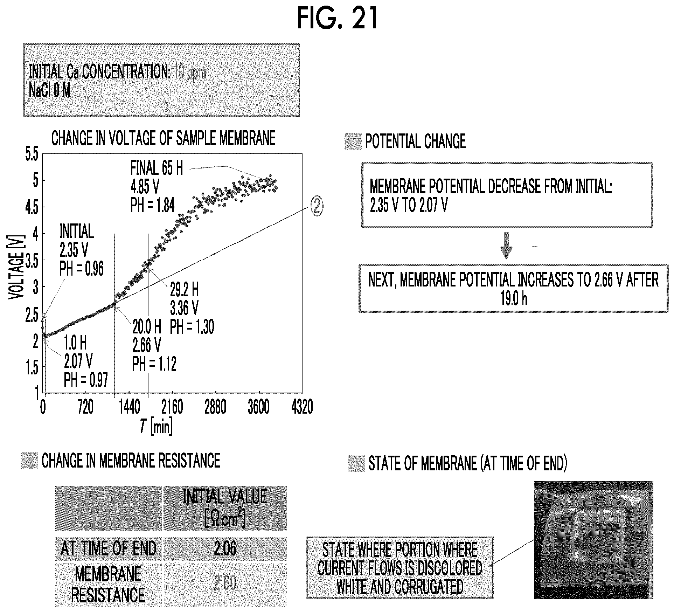

FIG. 21 shows a result of a long-term operation evaluation at an initial Ca concentration of 10 ppm and NaCl 0.0 M. In this case, the probe electrode potential decreases from 2.35 V to 2.07 V and increases up to 2.66 V after 19 hours. When the cell is disassembled after the measurement to measure the resistance of the sample membrane, the resistance is 2.60 Ωcm², which is clearly increased from 2.06 Ωcm² as a value before the measurement. In addition, as shown in the lower right portion of the drawing, a state where the current-applied surface of the membrane after the measurement is discolored white and corrugated is observed. The reason for this is presumed to be that a small concentration of Ca ions present in the sample solution are incorporated into the sample membrane such that the Ca ions and OH⁻present in the alkali solution react in the membrane to produce scale, the membrane resistance is increased by the scale such that the membrane is heated by a current flowing during the measurement, and the current-applied surface is deformed due to the heat.

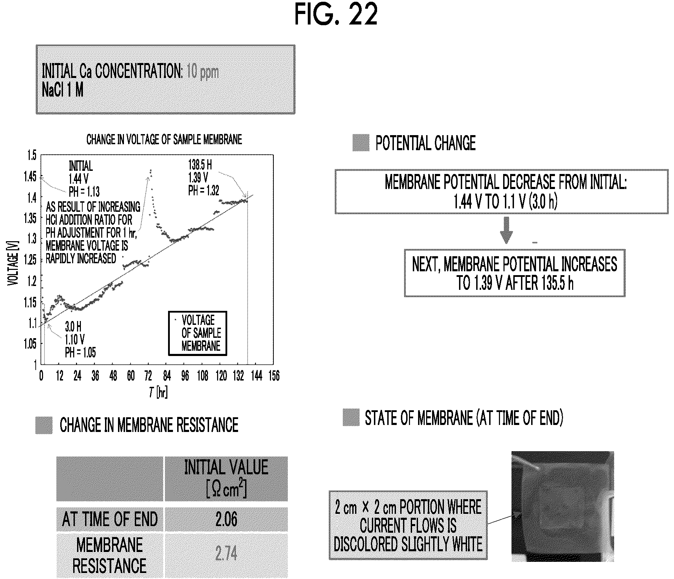

FIG. 22 shows a result of a long-term operation evaluation at an initial Ca concentration of 10 ppm and NaCl 1.0 M. In this case, the probe electrode potential decreases from 1.44 V to 1.1 V and increases up to 1.39 V after 135.5 hours. When the cell is disassembled after the measurement to measure the membrane resistance, the membrane resistance is 2.74 Ωcm², which is increased from 2.06 Ωcm² as a value before the measurement. In addition, as shown in the lower right portion of the drawing, the current-applied surface of the membrane after the measurement is observed slightly white, but the deformation of the membrane is not observed. The tendency of the increase of the probe electrode potential is clearly different between the case where 1.0 M NaCl is present in the sample solution and the case where NaCl is not present in the sample solution shown in FIG. 21. When 1.0 M NaCl is present in the sample solution, an increase in potential is small. In addition, the degree of discoloration or deformation of the membrane is also small. On the other hand, when 1.0 M NaCl is present (FIG. 22), the membrane resistance is increased from that when NaCl is not present (FIG. 21). The reason for this is estimated to be that the membrane is heated to be largely deformed under the conditions of FIG. 21 such that the membrane structure collapses.

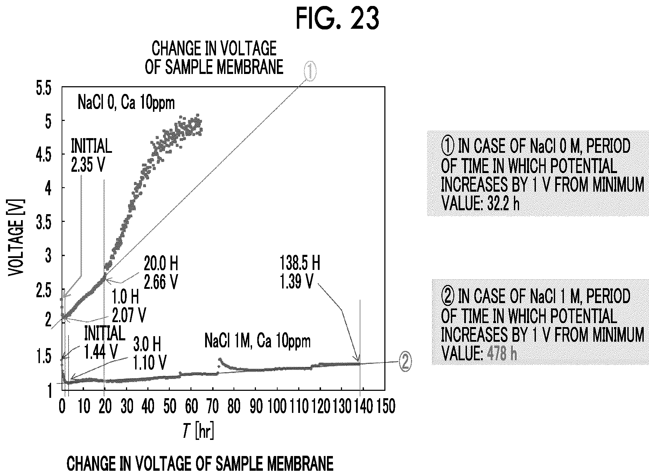

FIG. 23 collectively shows the results of the changes over time in probe electrode potential of FIGS. 21 and 22. In a case where NaCl is not present in the sample solution (0.0 M) (Circle 1 in FIG. 23), a period of time in which the potential increases by 1 V from the minimum value is 32.2 h when predicted from the relationship between the potential and the time. In a case where NaCl is present (1.0 M) (Circle 2 in FIG. 23), the period of time is 478 h. Therefore, it is found that an increase in potential is suppressed by about 15 times by allowing a monovalent salt to coexist. The reason for this is presumed to be that, as shown in FIG. 9, the amount of divalent Ca ions incorporated into the CEM is reduced by the coexisting monovalent cations.

It is found that from these results that:
(1) the amount of Ca scale in the CEM is reduced by the coexistence of the monovalent cations; and
(2) by allowing the monovalent cations to coexist, an increase in potential is reduced by about 15 times as compared to a case where the monovalent cations do not coexist.

As a result, by allowing the monovalent ion salt to coexist in the BMED-AB process, it can be estimated that long-term stability for use in brine having a low Ca concentration can be achieved.

In the above description, Na₂SO₄ or NaCl is investigated as a salt flowing toward the BMED after the Ca recovery of FIG. 1. However, it is needless to say that the salt is not limited to this example, and KCl or another sulfate system can also be applied.

As described above, according to the present invention, there is provided a method for operating a bipolar membrane electrodialyzer to produce an acid and an alkali from brine using a bipolar membrane electrodialyzer including a bipolar membrane, a cation exchange membrane and an anion exchange membrane, the method including: performing electrodialysis while adjusting an acid solution and/or an alkali solution to contain a salt to be decomposed. As a result, it is understood that a high current efficiency, in particular, both of current efficiencies of an acid and an alkali of 90% or higher can be achieved.

Further, brine produced in a carbon recycling process using the bipolar membrane electrodialyzer can also be used as the acid solution and/or the alkali solution used in the bipolar membrane electrodialysis.

In addition, by allowing monovalent cations to coexist in the alkali solution at a predetermined concentration, deposition of scale of divalent cations such as Ca ions in the cation exchange membrane (CEM) can also be suppressed.

### Industrial Applicability

As described above, according to the present invention, it is possible to provide a bipolar membrane electrodialyzer where a current efficiency is high such that deposition of scale in a cation exchange membrane caused by divalent cations is suppressed, and a method for operating the same.

## Claims

1. A method for operating a bipolar membrane electrodialyzer to produce an acid and an alkali from brine using a bipolar membrane electrodialyzer comprising a bipolar membrane, a cation exchange membrane and an anion exchange membrane, the method comprising:
performing electrodialysis while adjusting an acid solution and/or an alkali solution to contain a salt to be decomposed.

2. The method for operating a bipolar membrane electrodialyzer according to claim 1,
wherein brine produced in a carbon recycling process using the bipolar membrane electrodialyzer is used as the acid solution and/or the alkali solution.

3. A bipolar membrane electrodialyzer comprising a bipolar membrane, a cation exchange membrane and an anion exchange membrane, the bipolar membrane electrodialyzer comprising:
adjustment means for adjusting an acid solution and/or an alkali solution to contain a salt to be decomposed when an acid and an alkali are produced from brine.
